# EUROPEAN PATENT APPLICATION

(11) **EP 4 383 777 A1**
(43) Date of publication of application: **12.06.2024**
(21) Application number: 22852164.7
(22) Date of filing: 02.08.2022
(51) Int. Cl.: H04W 16/14

(54) **CHANNEL ACCESS METHOD FOR SIDELINK FEEDBACK INFORMATION, CHANNEL ACCESS PROCESSING METHOD FOR SIDELINK FEEDBACK INFORMATION, AND RELATED DEVICE**

(30) Priority: 02.08.2021 CN 202110881494
(71) Applicant: Vivo Mobile Communication Co., Ltd., Dongguan, Guangdong 523863 (CN)
(72) Inventor: PENG, Shuyan, Dongguan, Guangdong 523863 (CN); YANG, Yuming, Dongguan, Guangdong 523863 (CN); JI, Zichao, Dongguan, Guangdong 523863 (CN)
(74) Representative: Lavoix
(86) International application number: PCT/CN2022/109656
(87) International publication number: WO 2023/011452

(57) **Abstract**

This application discloses a channel access method and a processing method for sidelink feedback information, and a related device, and pertains to the field of communication technologies. The channel access method for sidelink feedback information in embodiments of this application includes: determining, by a first terminal, a target access manner; and executing, by the first terminal, a channel access procedure of first feedback information according to the target access manner.

## Description

### CROSS-REFERENCE TO RELATED APPLICATIONS

This application claims priority to Chinese Patent Application No. 202110881494.9, filed in China on August 2, 2021, which is incorporated herein by reference in its entirety.

### TECHNICAL FIELD

This application pertains to the field of communication technologies, and in particular, to a channel access method and a processing method for sidelink feedback information, and a related device.

### BACKGROUND

With development of a communication system, sidelink transmission is increasingly widely used. In a future communication system, a shared spectrum such as an unlicensed band (unlicensed band) may be used as a supplement to a licensed band (licensed band) to help an operator expand services. However, how to implement channel access of sidelink feedback information on an unlicensed band is a problem that needs to be urgently resolved.

### SUMMARY

Embodiments of this application provide a channel access method and a processing method for sidelink feedback information, and a related device, to resolve a problem of implementing channel access of sidelink feedback information on an unlicensed band.

According to a first aspect, a channel access method for sidelink feedback information is provided, including:
determining, by a first terminal, a target access manner; and
executing, by the first terminal, a channel access procedure of first feedback information according to the target access manner.

According to a second aspect, a channel access processing method for sidelink feedback information is provided, including:
sending, by a communication device, target indication information to a first terminal, where the target indication information is used by the first terminal to determine a target access manner for executing a channel access procedure of first feedback information, where
the communication device is a scheduling terminal, a receive end of the first feedback information, or a network side device.

According to a third aspect, a channel access apparatus for sidelink feedback information is provided, including:
a determining module, configured to determine a target access manner; and
an execution module, configured to execute a channel access procedure of first feedback information according to the target access manner.

According to a fourth aspect, a channel access processing apparatus for sidelink feedback information is provided, including:
a sending module, configured to send target indication information to a first terminal, where the target indication information is used by the first terminal to determine a target access manner for executing a channel access procedure of first feedback information.

According to a fifth aspect, a terminal is provided. The terminal includes a processor, a memory, and a program or an instruction that is stored in the memory and that can be run on the processor, where the program or the instruction is executed by the processor to implement the steps of the method according to the first aspect.

According to a sixth aspect, a terminal is provided, including a processor and a communication interface, where the processor is configured to: determine a target access manner; and execute a channel access procedure of first feedback information according to the target access manner.

Alternatively, the communication interface is configured to send target indication information to a first terminal, where the target indication information is used by the first terminal to determine a target access manner for executing a channel access procedure of first feedback information.

According to a seventh aspect, a network side device is provided. The network side device includes a processor, a memory, and a program or an instruction that is stored in the memory and that can be run on the processor, and the program or the instruction is executed by the processor to implement the steps of the method according to the first aspect.

According to an eighth aspect, a network side device is provided, including a processor and a communication interface, where the communication interface is configured to send target indication information to a first terminal, where the target indication information is used by the first terminal to determine a target access manner for executing a channel access procedure of first feedback information.

According to a ninth aspect, a readable storage medium is provided. A program or an instruction is stored on the readable storage medium, and the program or the instruction is executed by a processor to implement the steps of the method according to the first aspect or the steps of the method according to the second aspect.

According to a tenth aspect, an embodiment of this application provides a chip. The chip includes a processor and a communication interface, the communication interface is coupled to the processor, and the processor is configured to run a program or an instruction to implement the steps of the method according to the first aspect or the steps of the method according to the second aspect.

According to an eleventh aspect, a computer program/program product is provided. The computer program/program product is stored in a non-transient storage medium, and the computer program/program product is executed by at least one processor to implement the method according to the first aspect or the method according to the second aspect.

According to a twelfth aspect, a communication device is provided, configured to perform the steps of the method according to the first aspect or the steps of the method according to the second aspect.

In the embodiments of this application, a first terminal determines a target access manner, and executes a channel access procedure of first feedback information according to the target access manner. In this way, channel access of sidelink feedback information can be implemented on a shared band, to send feedback information. Therefore, in the embodiments of this application, system resource utilization can be improved to implement reliability balancing.

### BRIEF DESCRIPTION OF DRAWINGS

FIG. 1 is a structural diagram of a network system to which the embodiments of this application can be applied;
FIG. 2 is a flowchart of a channel access method for sidelink feedback information according to an embodiment of this application;
FIG. 3 is a flowchart of a channel access processing method for sidelink feedback information according to an embodiment of this application;
FIG. 4 is a structural diagram of a channel access apparatus for sidelink feedback information according to an embodiment of this application;
FIG. 5 is a structural diagram of a channel access processing apparatus for sidelink feedback information according to an embodiment of this application;
FIG. 6 is a structural diagram of a terminal according to an embodiment of this application;
FIG. 7 is a structural diagram of a communication device according to an embodiment of this application; and
FIG. 8 is a structural diagram of a network side device according to an embodiment of this application.

### DETAILED DESCRIPTION

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill based on the embodiments of this application shall fall within the protection scope of this application.

In the specification and claims of this application, the terms "first", "second", and the like are intended to distinguish between similar objects but do not describe a specific order or sequence. It should be understood that the terms used in such a way are interchangeable in proper circumstances so that the embodiments of this application can be implemented in orders other than the order illustrated or described herein. Objects classified by "first" and "second" are usually of a same type, and the number of objects is not limited. For example, there may be one or more first objects. In addition, in the specification and claims, "and/or" represents at least one of connected objects, and a character "/" generally represents an "or" relationship between associated objects.

It should be noted that technologies described in the embodiments of this application are not limited to a Long Time Evolution (Long Time Evolution, LTE)/LTE-Advanced (LTE-Advanced, LTE-A) system, and may further be applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency division multiple access (Single-carrier Frequency-Division Multiple Access, SC-FD-MA), and other systems. The terms "system" and "network" in the embodiments of this application may be used interchangeably. The technologies described can be applied to both the systems and the radio technologies mentioned above as well as to other systems and radio technologies. The following describes a New Radio (New Radio, NR) system for example purposes, and NR terms are used in most of the following descriptions. These technologies can also be applied to applications other than an NR system application, such as a 6th generation (6th Generation, 6G) communication system.

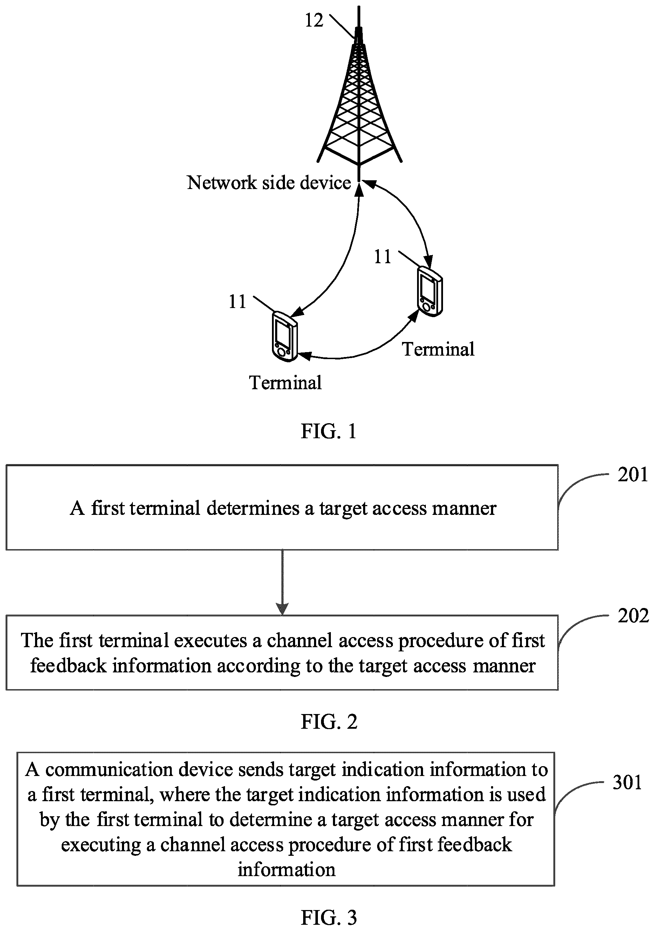

FIG. 1 is a block diagram of a wireless communication system to which the embodiments of this application can be applied. The wireless communication system includes a terminal 11 and a network side device 12. The terminal 11 may also be referred to as a terminal device or user equipment (User Equipment, UE). The terminal 11 may be a terminal-side device such as a mobile phone, a tablet personal computer (Tablet Personal Computer, TPC), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device, WD), vehicle user equipment (Vehicle User Equipment, VUE), or pedestrian user equipment (Pedestrian User Equipment, PUE). The wearable device includes: a smart watch, a wristband, a headset, and glasses. It should be noted that a specific type of the terminal 11 is not limited in the embodiments of this application. The network side device 12 may be a base station or a core network device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area networks (Wireless Local Area Networks, WLAN) access point, a wireless fidelity (Wireless Fidelity, Wi-Fi) node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

For ease of understanding, the following describes some content in the embodiments of this application.

### 1. Shared band

A shared band may be referred to as an unlicensed band. To be consistent with NR deployment and maximize NR-based unlicensed access as far as possible, the unlicensed band may work on 5 GHz, 37 GHz, and 60 GHz bands. The unlicensed band is shared by a plurality of radio access technologies (Radio Access Technology, RATs), such as Wi-Fi, radar, and licensed-assisted access (Licensed-Assisted Access, LAA). Therefore, in some countries or regions, the unlicensed band must comply with a regulation (regulation) when being used, to ensure that all devices can use the resource fairly, for example, regulations such as listen before talk (Listen Before Talk, LBT) and a maximum channel occupancy time (Maximum Channel Occupancy Time, MCOT). When the transmission node needs to send information, the transmission node needs to first perform LBT, and perform energy detection (Energy Detection, ED) on a surrounding node. When a detected power is less than a threshold, it is considered that the channel is idle (idle), and the transmission node may perform sending. Otherwise, the channel is considered to be busy, and the transmission node cannot perform sending. The transmission node may be a base station, UE, a Wi-Fi access point (Access Point, AP), or the like. After the transmission node starts to perform sending, a channel occupancy time (Channel Occupancy Time, COT) cannot exceed the MCOT.

Common LBT categories (Category) may be classified into Category 1 (Cat 1), Category 2 (Cat 2), and Category 4 (Cat 4). Category 1 LBT means that a transmit node does not perform LBT, that is, no LBT or immediate transmission (immediate transmission). Category 2 LBT is one-shot LBT, that is, the node performs LBT before transmission. If the channel is idle, transmission is performed, and if the channel is busy, transmission is not performed. Category 4 LBT is a back-off (back-off)-based channel listening mechanism. When detecting that the channel is busy, the transmission node performs back-off and continue listening until the channel is idle. For an NR node (NR NodeB, gNB), Category 2 LBT is applied to a physical downlink shared channel (Physical downlink shared channel, PDSCH) without a demodulation reference signal (Demodulation Reference Signal, DRS), and Category 4 LBT is applied to a PDSCH, a physical downlink control channel (Physical downlink control channel, PDCCH), and an enhanced PDCCH (ePDCCH). For UE, Category 4 LBT corresponds to a type 1 uplink (Uplink, UL) access procedure (type 1 UL channel access procedure), and Category 2 LBT corresponds to a type 2 uplink access procedure (type 2 UL channel access procedure). Cat 2 LBT includes 16 us Cat 2 LBT and 25 us Cat 2 LBT.

### 2. Load based equipment (load based equipment, LBE) network operation

For LBE, a transmission node may perform LBT from any moment until it is detected that the channel is empty to perform transmission. For a transmission node, there is no fixed listening time. When it is detected that the channel is busy, it is not required to skip. Listening may be continued through several extend clear channel assessments (Extend Clear Channel Assessment, eCCA) of backoff, until a counter (counter) of the eCCA is zero.

### 3. Channel access priority class (Channel access priority class, CAPC)

LBT is performed according to different CAPC values, and initiated MCOTs are different.

Optionally, a higher channel access priority corresponds to a shorter initiated MCOT.

### 4. Sidelink (sidelink, SL) transmission

An NR SL includes the following channels:
a physical sidelink control channel (Physical Sidelink Control Channel, PSCCH);
a physical sidelink shared channel (Physical Sidelink Shared Channel, PSSCH);
a physical sidelink broadcast channel (Physical Sidelink Broadcast Channel, PSBCH); and
a physical sidelink feedback channel (Physical Sidelink Feedback Channel, PSFCH).

The PSSCH performs resource allocation in units of subchannels, and uses a continuous resource allocation mode in frequency domain. A time domain resource of the PSCCH is a quantity of symbols configured by an upper layer, a frequency domain size is a parameter configured by the upper layer, a frequency domain resource of the PSCCH is less than or equal to a size of a subchannel, and the PSCCH is within a range of a lowest subchannel of the PSSCH.

### 5. NR SL resource allocation mode

NR vehicle-to-everything (Vehicle-to-Everything, V2X) defines two resource allocation modes (mode): a mode 1 in which a base station schedules a resource; and a mode 2 in which UE determines a resource to be used for transmission. In this case, resource information may be from a broadcast message or preconfigured information of the base station. If the UE works in a range of the base station and has a radio resource control (Radio Resource Control, RRC) connection to the base station, the UE can work in the mode 1 and/or the mode 2. If the UE works in the range of the base station but has no RRC connection to the base station, the UE can only work in the mode 2. If the UE is outside the range of the base station, the UE can only work in the mode 2, and perform V2X transmission according to the preconfigured information.

For the mode 2, a specific working manner is as follows:
(1) After triggering resource selection, a transmit terminal (TX UE) first determines a resource selection window, where a lower boundary of the resource selection window is in a T1 time after the resource selection is triggered, an upper boundary of the resource selection is in a T2 time after the resource selection is triggered, T2 is a value selected in a manner implemented by the UE in a packet delay budget (Packet Delay Budget, PDB) transmitted by a transport block (Transport Block, TB), and T2 is not earlier than T1.
(2) Before performing resource selection, the UE needs to determine a candidate resource set (candidate resource set) for resource selection, and compares a reference signal received power (Reference Signal Received Power, RSRP) measured on a resource in the resource selection window with a corresponding RSRP threshold (threshold). If the RSRP is less than the RSRP threshold, the resource may be included in the candidate resource set.
(3) After the resource set is determined, the UE randomly selects a transmission resource from the candidate resource set. In addition, the UE may reserve a transmission resource for next transmission after this transmission.

In addition, the NR V2X supports a chain resource reservation manner, that is, one piece of sidelink control information (Sidelink Control Information, SCI) may reserve a current resource, and a maximum of two additional resources may be reserved. In a next resource, two additional reserved resources may be indicated. In the selection window, resources can be continuously reserved in a dynamic reservation mode.

### 6. Resource detection

In an NRU, if "detect" is to determine whether a detected resource is busy or idle based on channel bandwidth occupation and an energy detection result, and determine, according to a determining result, whether a counter is decremented or whether information is sent on a next candidate resource.

In an SL, "detect" is to determine resource occupation/interference on a resource according to an RSRP of the detected resource, and determine whether a candidate resource in a corresponding resource selection window may be severely interfered with, to determine whether the corresponding resource needs to be ruled out.

The concept of detection is adopted on both the NRU and the SL. However, in the two systems, detection standards are different. In this patent, detection represents NRU detection and/or SL detection, or a new detection method, which is not limited herein.

With reference to the accompanying drawings, the following describes in detail a channel access method for sidelink feedback information provided in the embodiments of this application by using some embodiments and application scenes thereof.

Referring to FIG. 2, FIG. 2 is a flowchart of a channel access method for sidelink feedback information according to an embodiment of this application. As shown in FIG. 2, the method includes the following steps:
Step 201: A first terminal determines a target access manner.

In this embodiment of this application, the target access manner may be stipulated in a protocol, may be indicated or configured by a network side device or a second terminal, or may be determined by the first terminal. A default access manner may be directly stipulated in the protocol, or a manner of determining the target access manner may be stipulated in the protocol. When the network side device, a scheduling terminal, or the second terminal indicates or configures the target access manner, information about the target access manner may be directly indicated, or a manner of determining the target access manner may be indicated. For example, it indicates that the target access manner is associated with a parameter. The first terminal may be understood as a receive terminal of a PSSCH, the second terminal may be understood as a transmit terminal or a scheduling terminal of the PSSCH, the first feedback information may be understood as feedback information transmitted for the PSSCH, and the target access manner may be a target channel access manner.

In other words, in this embodiment of this application, a channel access manner may be selected in a manner of protocol stipulation, preconfiguration, configuration, or indication. The selected target access manner may include the Cat 1 LBT, Cat 2 LBT, or Cat 4 LBT-based channel access manner described in the foregoing embodiment.

Step 202: The first terminal executes a channel access procedure of first feedback information according to the target access manner.

In this embodiment of this application, after determining the target access manner, the first terminal may execute the channel access procedure of the first feedback information on an unlicensed band according to the target access manner. Specifically, the channel access procedure includes operations such as resource detection, resource selection, and sending of the first feedback information. Certainly, in this embodiment of this application, the target access manner is not limited to only channel access on an unlicensed band.

It should be noted that the first feedback information may include at least one of sidelink information carried on a PSFCH channel and other feedback information carried on a PSSCH. The sidelink information carried on the PSFCH channel includes HARQ information, and the other feedback information carried on the PSSCH may include a channel state information (Channel State Information, CSI) report, receive end auxiliary information, and the like. Alternatively, the CSI report may be carried on the PSFCH, and the receive end auxiliary information may be carried on the PSFCH, which is applicable to the present invention.

In this embodiment of this application, a first terminal determines a target access manner, and executes a channel access procedure of first feedback information according to the target access manner. In this way, channel access of sidelink feedback information can be implemented on a shared band, to send feedback information. Therefore, in the embodiments of this application, system resource utilization can be improved to implement reliability balancing.

Optionally, in some embodiments, the target access manner is determined based on at least one of the following:
N access manners, where N is a positive integer, and the N access manners are determined through at least one of the following: being stipulated in a protocol, being configured by a network side device, being preconfigured by a network side device, being indicated by a network side device, being configured by a terminal, and being indicated by a terminal;
a first association relationship between an access manner and a first object, where the first object includes at least one of a resource, a format, and a sequence of a physical sidelink feedback channel PSFCH;
a second association relationship between an access manner and a second object, where the second object includes at least one of feedback information, content carried in a multiplexed physical sidelink shared channel PSSCH, and a subcarrier spacing (Sub-Carrier Space, SCS);
a third association relationship between an access manner and a third object, where the third object includes at least one of quality of service of feedback information, a priority of feedback information, quality of service of a PSSCH corresponding to feedback information, a priority of a PSSCH corresponding to feedback information, a quantity of candidate resources of feedback information, a quantity of remaining candidate resources of feedback information, and a resource number of a candidate resource of feedback information; and
a channel access manner of second feedback information.

In this embodiment of this application, the access manner may be referred to as a channel access manner. The being configured by a terminal may be understood as being configured by the second terminal, and the being indicated by a terminal may be understood as being indicated by the second terminal.

In this embodiment of this application, in a case that the target access manner is determined based on the N access manners and a value of N is 1, it may be understood that the protocol stipulates, the network side device configures, the network side device preconfigures, the network side device indicates, the terminal configures, and the terminal indicates that the target access manner of the first terminal is a Cat 1 LBT, Cat 2 LBT, or Cat 4 LBT-based channel access manner.

Optionally, the N access manners meet at least one of the following:
in a case that the first feedback information is within a channel occupancy time COT of a second terminal, the N access manners include a default first access manner;
the N access manners include a second access manner indicated by a network side device by using downlink control information; and
the N access manners include a third access manner indicated by the second terminal.

In this embodiment of this application, the default first access manner may be understood as a default first access manner in the protocol. Specifically, the first access manner may be understood as Cat 1 LBT or Cat 2 LBT. In a case that the first feedback information is within a channel occupancy time COT range of the second terminal, the first terminal may execute the channel access procedure of the first feedback information based on the default first access manner, so that fast feedback can be performed, and detection overheads are reduced.

Optionally, the COT of the second terminal may be indicated by the second terminal or the network side device, and is not further limited herein. For example, the scheduling terminal or the transmit terminal of the PSSCH sends SCI (level-1 SCI and/or level-2 SCI) to indicate a remaining COT of the scheduling terminal or the transmit terminal of the PSSCH. Alternatively, the network side device indicates a remaining COT of the scheduling terminal or the transmit terminal of the PSSCH by using downlink control information (Downlink Control Information, DCI).

It should be understood that the network side device may explicitly or implicitly indicate the channel access manner of the first terminal by using DCI, that is, the second access manner. The scheduling terminal or the transmit terminal of the PSSCH may explicitly or implicitly indicate the channel access manner of the first terminal by using SCI, that is, the third access manner. It should be noted that Cat 1 LBT may be used for sending as soon as possible, but channel quality is not necessarily good. If the sending fails, system interference is increased. Cat 2 LBT may be used for sending after measurement to ensure channel quality, but a channel may be preempted. In this embodiment of this application, an access manner is dynamically indicated, which has relatively high flexibility.

Optionally, in a case that the first terminal receives access manners that are of the first feedback information and that are indicated by a plurality of pieces of DCI or SCI, the first terminal may determine the target access manner according to a specific regulation to perform channel access. For example, the first terminal performs channel access in a most recent channel access manner indicated by DCI or SCI, or the first terminal performs channel access in an indicated channel access manner with a longest LBT time (for example, Cat 4) or a shortest LBT time (for example, Cat 1). In other words, in a case that N is greater than 1, and the N access manners include N1 second access manners and N2 third access manners, the target access manner is any one of the following access manners:
a most recently indicated access manner in the N access manners, the N1 second access manners, or the N2 third access manners;
a preset access manner in the N access manners, the N1 second access manners, or the N2 third access manners, where the preset access manner is indicated by the network side device or the second terminal; and
an access manner corresponding to a longest or shortest listen before talk LBT time in the N access manners, where
both N1 and N2 are natural numbers, and a sum of N1 and N2 is N.

In this embodiment of this application, the most recent indication is a most recent indication that meets a time interval. In other words, the most recent indication may be understood as a most recent valid indication.

Optionally, in a case that the target access manner is determined based on the first association relationship, the target access manner meets at least one of the following:
in a case that the first feedback information is a first format, a first sequence, or a first symbol quantity, the target access manner is a first category LBT access manner; and
in a case that the first feedback information is a second format, a second sequence, or a second symbol quantity, the target access manner is a second category LBT access manner.

In this embodiment of this application, the first format (format) may be understood as a PSFCH format 1, and the second format may be understood as a PSFCH format 2. The first category LBT access manner may be understood as a Cat 1 LBT-based channel access manner, or may be referred to as Cat 1 LBT. The second category LBT access manner may be understood as a Cat 2 LBT-based channel access manner, or may be referred to as Cat 2 LBT. The PSFCH format 1 may be an M3 (for example, M3=4) symbol PSFCH format, and a PSFCH format 2 is an M4 symbol PSFCH format. M4≥M3. M1 and M2 include or do not include a length of cyclic prefix extension (Cyclic Prefix Extension, CPE).

Optionally, the target access manner is associated with a first object of feedback information, and the target access manner meets at least one of the following:
in a case that the first feedback information is carried only in a PSFCH, the target access manner is a first category LBT or second category LBT access manner;
the target access manner is associated with a data transmission type or a data transmission target identifier in a PSSCH;
in a case that the first feedback information carries a sidelink scheduling request, the target access manner is a first category LBT or second category LBT access manner; and
in a case that the first feedback information carries a sidelink reference signal, the target access manner is a first category LBT or second category LBT access manner.

In a case that the target access manner is determined based on the second association relationship, the target access manner is associated with the data transmission type or the target identifier in the PSSCH.

It is assumed that in a case that the first feedback information is carried only in the PSFCH, the target access manner is first category LBT. In this case, if an SCS is X, the PSFCH occupies four orthogonal frequency division multiplexing (Orthogonal frequency division multiplexing, OFDM) symbols, to meet a requirement of maximum 584 us for Cat 1 LBT.

Optionally, the target access manner meets at least one of the following:
in a case that the data transmission type is a broadcast data type or the target identifier is a broadcast identifier, the target access manner is a first category LBT or second category LBT access manner;
in a case that the data transmission type is a multicast data type or the target identifier is a multicast identifier, the target access manner is a first category LBT or second category LBT access manner; and
in a case that the data transmission type is a unicast data type or the target identifier is a unicast identifier, the target access manner is a second category or third category LBT access manner.

In this embodiment of this application, the third category LBT access manner may be understood as a Cat 4 LBT-based channel access manner, or may be referred to as Cat 4 LBT.

Optionally, in a case that the target access manner is determined based on the second association relationship, and the target access manner is associated with at least one of the quantity of candidate resources of the feedback information, the quantity of remaining resources of the feedback information, and the resource number of the candidate resource of the feedback information, the target access manner meets at least one of the following:
an A^{th} candidate resource is detected in a second category LBT access manner with first detection duration, where A is a first preset value;
in a case that the quantity of remaining candidate resources is less than or equal to a second preset value, a second category LBT or first category LBT access manner is used;
when the second category LBT access manner with the first detection duration fails to detect the A^{th} candidate resource, an (A+n)^{th} candidate resource is detected in a second category or third category LBT access manner with second detection duration, where n is a positive integer; and
when the second category LBT access manner with the first detection duration fails to detect the first A candidate resources, an (A+n)^{th} candidate resource is detected in a second category or third category LBT access manner with second detection duration, where n is a positive integer.

It should be noted that in this embodiment of this application, the second category LBT access manner includes the following two types:
the second category LBT access manner with the first detection duration; and
the second category LBT access manner with the second detection duration.

In this application, in a case that detection duration of the second category LBT access manner is not limited, the described second category LBT access manner may be understood as the second category LBT access manner with the first detection duration or the second category LBT access manner with the second detection duration. The first detection duration may be 16 us, and the first detection duration may be 25 us. That is, in this embodiment of this application, the second category LBT access manner with the first detection duration may be represented as Cat 2 (16 us) LBT, and the second category LBT access manner with the second detection duration may be represented as Cat 2 (25 us) LBT.

Optionally, if a plurality of subsequent resources are configured, Cat 2 LBT or Cat 4 LBT may be first performed on the previous resources. If Cat 2 LBT or Cat 4 LBT on the previous resources fail, Cat 1 LBT is used for a last resource.

Optionally, in a case that the target access manner is determined based on the channel access manner of the second feedback information, the target access manner is at least one of the following:
a fastest or slowest channel access manner in M access manners;
a fastest or slowest channel access manner in M1 access manners associated with the second feedback information;
a channel access manner of an m^{th} piece of second feedback information, where m is a preset value; and
a channel access manner of second feedback information whose frequency domain resource is adjacent to or closest to that of the first feedback information, where
the M access manners include the M1 access manners and M2 access manners associated with the first feedback information, M1 is a positive integer less than or equal to M, and a sum of M1 and M2 is M.

In this embodiment of this application, in a case that the target access manner is the fastest channel access manner in the M access manners, for example, if Cat 1 LBT is configured for other feedback information or the first feedback information, access is performed through Cat 1 LBT. If Cat 1 LBT is not configured and Cat 2 LBT is configured, access is performed through Cat 2 LBT.

Optionally, the second feedback information meets at least one of the following:
a start moment of the second feedback information is the same as a start moment of the first feedback information; and
the second feedback information is feedback information other than the first feedback information in to-be-sent feedback information.

Optionally, in some embodiments, the method further includes:
determining, by the first terminal, at least one of a format, a resource mapping manner, and a resource selection manner of the first feedback information according to a first mapping relationship between an access manner and feedback information.

In this embodiment of this application, in a case that a format of feedback information is associated with a channel access manner or an SCS of the feedback information, if the Cat 2 LBT or Cat 4 LBT access manner is used, 4 OS transmission may be considered. If the Cat 1 manner is used, a PSFCH with longer symbols may be considered to ensure reliability.

Optionally, the first mapping relationship meets at least one of the following:
in a case that the target access manner is a second category or third category LBT access manner, the format of the first feedback information is a first format;
in a case that the target access manner is a second category or third category LBT access manner, the resource mapping manner of the first feedback information is a first resource mapping manner;
in a case that the target access manner is a second category or third category LBT access manner, the resource selection manner of the first feedback information is a first resource selection manner;
in a case that the target access manner is a first category LBT access manner, the format of the first feedback information is a second format;
in a case that the target access manner is a first category LBT access manner, the resource mapping manner of the first feedback information is a second resource mapping manner; and
in a case that the target access manner is a first category LBT access manner, the resource selection manner of the first feedback information is a second resource selection manner.

In this embodiment of this application, the first resource mapping manner may be understood as a time-frequency resource mapping manner 1, and the second resource mapping manner may be understood as a time-frequency resource mapping manner 2. In other words, if the Cat 2/Cat 4 LBT channel access manner is used, it corresponds to the PSFCH format 1/time-frequency resource mapping manner 1; and if the Cat 1 LBT channel access manner is used, it corresponds to the PSFCH format 2/time-frequency resource mapping manner 2.

Optionally, in a case that the target access manner is a first category LBT or second category LBT access manner, the channel access procedure includes: executing, by the first terminal, transmission according to configured or indicated CPE information.

It should be understood that, if a gap (GAP) corresponding to Cat 1 LBT/Cat 2 LBT is located after the PSSCH of the transmit terminal, the gap is implemented by the transmit terminal, and the receive terminal does not need to be notified.

Optionally, indication information of the CPE information is carried in target indication signaling, and the target indication signaling is downlink control information DCI signaling or sidelink control information SCI signaling.

In this embodiment of this application, the indication information may explicitly or implicitly indicate the CPE information. The CPE information indicates that a CPE transmission location is before or after a start moment of the first feedback information.

It should be understood that, that the CPE information indicates that the CPE transmission location is before the first feedback information may be understood that the CPE information indicates that the CPE transmission location is before the transmission start moment of the first feedback information. In other words, the CPE information indicates that the CPE transmission location is before a start location of a scheduled or indicated PSFCH/PSSCH. Similarly, that the CPE information indicates that the CPE transmission location is after the first feedback information may be understood that the CPE information indicates that the CPE transmission location is after the transmission start moment of the first feedback information. In other words, the CPE information indicates that the CPE transmission location is after a start location of a scheduled or indicated PSFCH/PSSCH. For example, SCI may carry 1 bit indication information to indicate that the CPE transmission location is before or after the start moment of the first feedback information.

Optionally, in some embodiments, a parameter of the channel access procedure includes a first channel access priority class CAPC, and the first CAPC meets at least one of the following:
there is a mapping relationship between the first CAPC and sidelink information quality of service;
the first CAPC is determined according to a fourth object of a PSSCH corresponding to the first feedback information;
the first CAPC is determined according to a priority indicated by a PSCCH corresponding to the first feedback information;
the first CAPC is the same as a second CAPC of the PSSCH corresponding to the first feedback information;
the first CAPC is determined according to a lowest CAPC value of to-be-transmitted data;
in a case that the first feedback information corresponds to L CAPCs, and the first feedback information is carried only in a PSFCH, the first CAPC is determined according to a preset regulation, where L is an integer greater than 1;
the first CAPC is associated with a quantity of candidate resources or a quantity of remaining candidate resources; and
the first CAPC is a CAPC that is of a PSFCH and that is stipulated in a protocol, preconfigured, or configured, where
the fourth object includes a priority and a logical channel priority.

In this embodiment of this application, in a case that there is a mapping relationship between the first CAPC and the sidelink information quality of service, the first terminal may determine a CAPC according to a priority of to-be-transmitted data and a mapping relationship between the CAPC and the SL information quality of service (Quality of Service, QoS), to perform channel access. Optionally, the to-be-transmitted data may include at least one of a PSFCH, a CSI report, an SL scheduling request (Scheduling Request, SR), a PSSCH, and a PSCCH.

In a case that the first feedback information is carried only in the PSFCH, and the first CAPC is determined according to the fourth object of the PSSCH corresponding to the first feedback information, the first CAPC is determined according to a priority or a logical channel priority of the PSSCH corresponding to the PSFCH. In a case that the first feedback information is carried only in the PSFCH, and the first CAPC is determined according to the priority indicated by the PSCCH corresponding to the first feedback information, the first CAPC is determined according to a priority indicated in SCI carried in the PSCCH corresponding to the PSFCH.

Optionally, in some embodiments, when there is no priority indication in the PSFCH, the CAPC is associated with a CAPC of the PSSCH.

Optionally, a lower CAPC value corresponds to a higher priority, or a higher CAPC value corresponds to a higher priority.

It should be noted that the first feedback information carried only in the PSFCH may be understood as PSFCH only transmission. If a plurality of PSFCH transmissions exist and is PSFCH only transmission, the first CAPC is determined according to the foregoing preset regulation.

Optionally, the preset regulation includes any one of the following:
the first CAPC is a lowest CAPC in the L CAPCs;
the first CAPC is determined according to a priority or a CAPC corresponding to a first PSSCH associated with a second terminal; and
the first CAPC is determined according to a priority or a CAPC corresponding to a second PSSCH associated with the second terminal, where
the first PSSCH is associated with the PSFCH, the second PSSCH is a PSSCH within a first COT of the second terminal, and a time domain location of the PSFCH is within the first COT.

Optionally, in a case that the first CAPC is associated with the quantity of candidate resources or the quantity of remaining candidate resources, the first CAPC meets any one of the following:
in a case that the quantity of candidate resources is greater than or equal to a third preset value, a CAPC value of the first CAPC is a first threshold; and in a case that the quantity of candidate resources is less than the third preset value, the CAPC value of the first CAPC is a second threshold; and
in a case that the quantity of remaining candidate resources is greater than or equal to a fourth preset value, the CAPC value of the first CAPC is the first threshold; and in a case that the quantity of remaining candidate resources is less than the fourth preset value, the CAPC value of the first CAPC is the second threshold.

In this embodiment of this application, CAPC adjustment is performed based on an access parameter corresponding to a previously received TB. Through the CAPC adjustment, an access priority can be improved in a case that a quantity of candidate resources is relatively small, to perform access as early as possible.

To better understand this application, the following provides specific descriptions by using some specific examples.

### Embodiment 1

A transmit terminal (Transmit X UE, TX UE) indicates (initiated) a COT, and sends a PSCCH/PSSCH to a receive terminal (Receive X UE, RX UE) within the COT. SCI carries a PSFCH channel access indication, which is Cat 1 LBT, Cat 2 (16 us) LBT, Cat 2 (25 us) LBT, or Cat 4 LBT access.

The RX UE receives the PSCCH/PSSCH, and determines a location of a candidate PSFCH according to a mapping regulation between a PSSCH/PSCCH and a PSFCH.

If the TX UE indicates that the PSFCH is a Cat 2 (25 us) LBT channel access manner, the RX UE performs LBT before a PSFCH candidate resource (determines a detection start location according to a PSFCH start location, a CPE length, and 25 us, which is implemented by the RX UE).

If it succeeds, transmission is performed on a corresponding PSFCH resource by using a predefined PSFCH format (format) or a PSFCH structure (structure).

If it fails, LBT is performed before a next PSFCH candidate resource.

### Embodiment 2

Solution 1: TX UE initiated a COT, and sends a PSCCH/PSSCH to RX UE within the COT. SCI carries a PSFCH channel access indication, which is Cat 1 LBT, Cat 2 (16 us) LBT, Cat 2 (25 us) LBT, or Cat 4 LBT access; and carries CPE indication information.

The RX UE receives the PSCCH/PSSCH, and determines a location of a candidate PSFCH according to a mapping regulation between a PSSCH/PSCCH and a PSFCH.

If TX UE indicates that the PSFCH is a Cat 2 (25 us) LBT channel access manner, the RX UE performs LBT before a first PSFCH candidate resource (determines a detection start location according to a PSFCH resource location, a CPE indication, and 25 us).

If it succeeds, transmission is performed on a first candidate PSFCH resource by using a predefined PSFCH format/structure.

If it fails, Cat 2 (16 us) LBT detection is performed before a next PSFCH candidate resource. A CAPC parameter is determined according to a priority of a PSSCH corresponding to a PSFCH.

Solution 2: Predefined RX UE performs channel access on the first N-1 PSFCH candidate resources through Cat 2 LBT, and performs channel access on a last PSFCH candidate resource through Cat 1 LBT.

TX UE initiated a COT, and sends a PSCCH/PSSCH to the RX UE (i.e., UE 2) within the COT. SCI carries a PSFCH channel access indication, which is Cat 1 LBT, Cat 2 (16 us) LBT, Cat 2 (25 us) LBT, or Cat 4 LBT access; and carries CPE indication information.

The RX UE receives the PSCCH/PSSCH, and determines a location of a candidate PSFCH according to a mapping regulation between a PSSCH/PSCCH and a PSFCH. A quantity of PSFCH candidate resources is N.

It is determined whether the quantity N of PSFCH candidate resources ≤ N_thresh (e.g., N_thresh=1).

If no, the TX UE indicates that the PSFCH is a Cat 2 (25 us/16 us) LBT channel access manner, and the RX UE performs LBT before a PSFCH candidate resource (determines a detection start location according to a PSFCH resource location, a CPE indication, and 25 us/16 us).

If it succeeds, transmission is performed on a first candidate PSFCH resource by using a predefined PSFCH format/structure.

If it fails, Cat 2 (25 us/16 us) LBT detection is performed before a next PSFCH candidate resource. A CAPC parameter is determined according to a priority of a PSSCH corresponding to a PSFCH.

If yes, channel access is performed through Cat 1 LBT.

### Embodiment 3

TX UE initiated a COT and sends a PSCCH/PSSCH to RX UE within the COT. SCI carries a PSFCH channel access indication, which is Cat 1 LBT, Cat 2 (16 us) LBT, Cat 2 (25 us) LBT, or Cat 4 LBT access. The SCI carries a PSFCH candidate resource indication.

The RX UE receives the PSCCH/PSSCH, and determines a location of a PSFCH candidate resource according to the indication in the SCI.

If the TX UE indicates that the PSFCH is a Cat 2 (25 us) LBT channel access manner, the RX UE performs LBT before a PSFCH candidate resource.

If it succeeds, transmission is performed on a corresponding PSFCH resource by using a predefined PSFCH format/structure.

If it fails, LBT is performed before a next PSFCH candidate resource.

Referring to FIG. 3, FIG. 3 is a flowchart of a channel access processing method for sidelink feedback information according to an embodiment of this application. As shown in FIG. 3, the method includes the following steps:
Step 301: A communication device sends target indication information to a first terminal, where the target indication information is used by the first terminal to determine a target access manner for executing a channel access procedure of first feedback information.

The communication device is a scheduling terminal, a receive end of the first feedback information, or a network side device.

Optionally, the target indication information is used to indicate at least one of the following:
N access manners;
a first association relationship between an access manner and a first object, where the first object includes at least one of a resource, a format, and a sequence of a physical sidelink feedback channel PSFCH;
a second association relationship between an access manner and a second object, where the second object includes at least one of feedback information, content carried in a multiplexed physical sidelink shared channel PSSCH, and a subcarrier spacing SCS;
a third association relationship between an access manner and a third object, where the third object includes at least one of quality of service of feedback information, a priority of feedback information, quality of service of a PSSCH corresponding to feedback information, a priority of a PSSCH corresponding to feedback information, a quantity of candidate resources of feedback information, a quantity of remaining candidate resources of feedback information, and a resource number of a candidate resource of feedback information; and
a channel access manner of second feedback information.

Optionally, in a case that the target access manner is determined based on the first association relationship, the target access manner meets at least one of the following:
in a case that the first feedback information is a first format, a first sequence, or a first symbol quantity, the target access manner is a first category LBT access manner; and
in a case that the first feedback information is a second format, a second sequence, or a second symbol quantity, the target access manner is a second category LBT access manner.

In a case that the target access manner is determined based on the second association relationship, the target access manner is associated with the data transmission type or the target identifier in the PSSCH.

Optionally, in a case that the target access manner is determined based on the second association relationship, the target access manner is associated with the data transmission type or the target identifier in the PSSCH.

Optionally, the target access manner meets at least one of the following:
in a case that the data transmission type is a broadcast data type or the target identifier is a broadcast identifier, the target access manner is a first category LBT or second category LBT access manner;
in a case that the data transmission type is a multicast data type or the target identifier is a multicast identifier, the target access manner is a first category LBT or second category LBT access manner; and
in a case that the data transmission type is a unicast data type or the target identifier is a unicast identifier, the target access manner is a second category or third category LBT access manner.

Optionally, the target access manner is associated with a first object of feedback information, and the target access manner meets at least one of the following:
in a case that the first feedback information is carried only in a PSFCH, the target access manner is a first category LBT or second category LBT access manner;
the target access manner is associated with a data transmission type or a data transmission target identifier in a PSSCH;
in a case that the first feedback information carries a sidelink scheduling request, the target access manner is a first category LBT or second category LBT access manner; and
in a case that the first feedback information carries a sidelink reference signal, the target access manner is a first category LBT or second category LBT access manner.

Optionally, in a case that the target access manner is determined based on the channel access manner of the second feedback information, the target access manner is at least one of the following:
a fastest or slowest channel access manner in M access manners;
a fastest or slowest channel access manner in M1 access manners associated with the second feedback information;
a channel access manner of an m^{th} piece of second feedback information, where m is a preset value; and
a channel access manner of second feedback information whose frequency domain resource is adjacent to or closest to that of the first feedback information, where
the M access manners include the M1 access manners and M2 access manners associated with the first feedback information, M1 is a positive integer less than or equal to M, and a sum of M1 and M2 is M.

Optionally, the second feedback information meets at least one of the following:
a start moment of the second feedback information is the same as a start moment of the first feedback information; and
the second feedback information is feedback information other than the first feedback information in to-be-sent feedback information.

Optionally, the second feedback information meets at least one of the following:
a start moment of the second feedback information is the same as a start moment of the first feedback information; and
the second feedback information is feedback information other than the first feedback information in to-be-sent feedback information.

Optionally, a parameter of the channel access procedure includes a first channel access priority class CAPC, and the first CAPC meets at least one of the following:
there is a mapping relationship between the first CAPC and sidelink information quality of service;
the first CAPC is determined according to a fourth object of a PSSCH corresponding to the first feedback information;
the first CAPC is determined according to a priority indicated by a PSCCH corresponding to the first feedback information;
the first CAPC is the same as a second CAPC of the PSSCH corresponding to the first feedback information;
the first CAPC is determined according to a lowest CAPC value of to-be-transmitted data;
in a case that the first feedback information corresponds to L CAPCs, and the first feedback information is carried only in a PSFCH, the first CAPC is determined according to a preset regulation, where L is an integer greater than 1;
the first CAPC is associated with a quantity of candidate resources or a quantity of remaining candidate resources; and
the first CAPC is a CAPC that is of a PSFCH and that is stipulated in a protocol, preconfigured, or configured, where
the fourth object includes a priority and a logical channel priority.

Optionally, the preset regulation includes any one of the following:
the first CAPC is a lowest CAPC in the L CAPCs;
the first CAPC is determined according to a priority or a CAPC corresponding to a first PSSCH associated with a second terminal; and
the first CAPC is determined according to a priority or a CAPC corresponding to a second PSSCH associated with the second terminal, where
the first PSSCH is associated with the PSFCH, the second PSSCH is a PSSCH within a first COT of the second terminal, and a time domain location of the PSFCH is within the first COT.

Optionally, in a case that the first CAPC is associated with the quantity of candidate resources or the quantity of remaining candidate resources, the first CAPC meets any one of the following:
in a case that the quantity of candidate resources is greater than or equal to a third preset value, a CAPC value of the first CAPC is a first threshold; and in a case that the quantity of candidate resources is less than the third preset value, the CAPC value of the first CAPC is a second threshold; and
in a case that the quantity of remaining candidate resources is greater than or equal to a fourth preset value, the CAPC value of the first CAPC is the first threshold; and in a case that the quantity of remaining candidate resources is less than the fourth preset value, the CAPC value of the first CAPC is the second threshold.

It should be noted that this embodiment is used as an implementation of the communication device corresponding to the embodiment shown in FIG. 2. For a specific implementation of this embodiment, reference may be made to the related descriptions of the embodiment shown in FIG. 2, and a same beneficial effect is achieved. To avoid repetition, details are not described herein again.

It should be noted that, the channel access method for sidelink feedback information provided in the embodiments of this application may be performed by a channel access apparatus for sidelink feedback information, or a control module that is in the channel access apparatus for sidelink feedback information and that is configured to perform the channel access method for sidelink feedback information. In the embodiments of this application, an example in which the channel access apparatus for sidelink feedback information performs the channel access method for sidelink feedback information is used to describe the channel access apparatus for sidelink feedback information provided in the embodiments of this application.

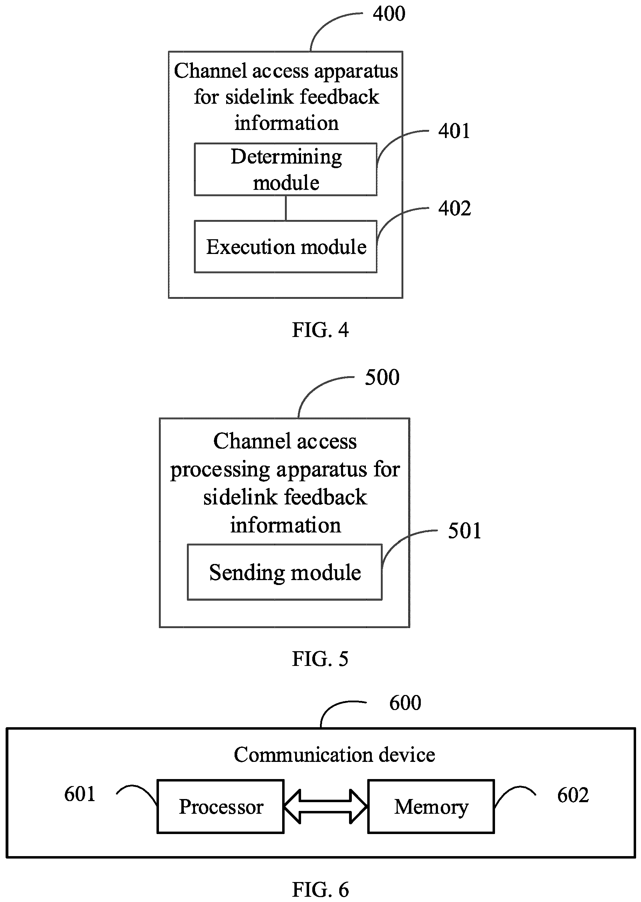

Referring to FIG. 4, FIG. 4 is a structural diagram of a channel access apparatus for sidelink feedback information according to an embodiment of this application. As shown in FIG. 4, a channel access apparatus 400 for sidelink feedback information includes:
a determining module 401, configured to determine a target access manner; and
an execution module 402, configured to execute a channel access procedure of first feedback information according to the target access manner.

Optionally, the target access manner is determined based on at least one of the following:
N access manners, where N is a positive integer, and the N access manners are determined through at least one of the following: being stipulated in a protocol, being configured by a network side device, being preconfigured by a network side device, being indicated by a network side device, being configured by a terminal, and being indicated by a terminal;
a first association relationship between an access manner and a first object, where the first object includes at least one of a resource, a format, and a sequence of a physical sidelink feedback channel PSFCH;
a second association relationship between an access manner and a second object, where the second object includes at least one of feedback information, content carried in a multiplexed physical sidelink shared channel PSSCH, and a subcarrier spacing SCS;
a third association relationship between an access manner and a third object, where the third object includes at least one of quality of service of feedback information, a priority of feedback information, quality of service of a PSSCH corresponding to feedback information, a priority of a PSSCH corresponding to feedback information, a quantity of candidate resources of feedback information, a quantity of remaining candidate resources of feedback information, and a resource number of a candidate resource of feedback information; and
a channel access manner of second feedback information.

Optionally, the N access manners meet at least one of the following:
in a case that the first feedback information is within a channel occupancy time COT range of a second terminal, the N access manners include a default first access manner;
the N access manners include a second access manner indicated by a network side device by using downlink control information; and
the N access manners include a third access manner indicated by the second terminal.

Optionally, in a case that N is greater than 1, and the N access manners include N1 second access manners and N2 third access manners, the target access manner is any one of the following access manners:
a most recently indicated access manner in the N access manners, the N1 second access manners, or the N2 third access manners;
a preset access manner in the N access manners, the N1 second access manners, or the N2 third access manners, where the preset access manner is indicated by the network side device or the second terminal; and
an access manner corresponding to a longest or shortest listen before talk LBT time in the N access manners, where
both N1 and N2 are natural numbers, and a sum of N1 and N2 is N.

Optionally, the COT of the second terminal is indicated by the second terminal or the network side device.

Optionally, in a case that the target access manner is determined based on the first association relationship, the target access manner meets at least one of the following:
in a case that the first feedback information is a first format, a first sequence, or a first symbol quantity, the target access manner is a first category LBT access manner; and
in a case that the first feedback information is a second format, a second sequence, or a second symbol quantity, the target access manner is a second category LBT access manner.

Optionally, the target access manner is associated with a first object of feedback information, and the target access manner meets at least one of the following:
in a case that the first feedback information is carried only in a PSFCH, the target access manner is a first category LBT or second category LBT access manner;
the target access manner is associated with a data transmission type or a data transmission target identifier in a PSSCH;

in a case that the first feedback information carries a sidelink scheduling request, the target access manner is a first category LBT or second category LBT access manner; and
in a case that the first feedback information carries a sidelink reference signal, the target access manner is a first category LBT or second category LBT access manner.

Optionally, in a case that the target access manner is determined based on the second association relationship, the target access manner is associated with the data transmission type or the target identifier in the PSSCH.

Optionally, the target access manner meets at least one of the following:
in a case that the data transmission type is a broadcast data type or the target identifier is a broadcast identifier, the target access manner is a first category LBT or second category LBT access manner;
in a case that the data transmission type is a multicast data type or the target identifier is a multicast identifier, the target access manner is a first category LBT or second category LBT access manner; and
in a case that the data transmission type is a unicast data type or the target identifier is a unicast identifier, the target access manner is a second category or third category LBT access manner.

Optionally, in a case that the target access manner is determined based on the second association relationship, and the target access manner is associated with at least one of the quantity of candidate resources of the feedback information, the quantity of remaining resources of the feedback information, and the resource number of the candidate resource of the feedback information, the target access manner meets at least one of the following:
an A^{th} candidate resource is detected in a second category LBT access manner with first detection duration, where A is a first preset value;
in a case that the quantity of remaining candidate resources is less than or equal to a second preset value, a second category LBT or first category LBT access manner is used;
when the second category LBT access manner with the first detection duration fails to detect the A^{th} candidate resource, an (A+n)^{th} candidate resource is detected in a second category or third category LBT access manner with second detection duration, where n is a positive integer; and
when the second category LBT access manner with the first detection duration fails to detect the first A candidate resources, an (A+n)^{th} candidate resource is detected in a second category or third category LBT access manner with second detection duration, where n is a positive integer.

Optionally, in a case that the target access manner is determined based on the channel access manner of the second feedback information, the target access manner is at least one of the following:
a fastest or slowest channel access manner in M access manners;
a fastest or slowest channel access manner in M1 access manners associated with the second feedback information;
a channel access manner of an m^{th} piece of second feedback information, where m is a preset value; and
a channel access manner of second feedback information whose frequency domain resource is adjacent to or closest to that of the first feedback information, where
the M access manners include the M1 access manners and M2 access manners associated with the first feedback information, M1 is a positive integer less than or equal to M, and a sum of M1 and M2 is M.

Optionally, the second feedback information meets at least one of the following:
a start moment of the second feedback information is the same as a start moment of the first feedback information; and
the second feedback information is feedback information other than the first feedback information in to-be-sent feedback information.

Optionally, the determining module 401 is further configured to determine at least one of a format, a resource mapping manner, and a resource selection manner of the first feedback information according to a first mapping relationship between an access manner and feedback information.

Optionally, the first mapping relationship meets at least one of the following:
in a case that the target access manner is a second category or third category LBT access manner, the format of the first feedback information is a first format;
in a case that the target access manner is a second category or third category LBT access manner, the resource mapping manner of the first feedback information is a first resource mapping manner;
in a case that the target access manner is a second category or third category LBT access manner, the resource selection manner of the first feedback information is a first resource selection manner;
in a case that the target access manner is a first category LBT access manner, the format of the first feedback information is a second format;
in a case that the target access manner is a first category LBT access manner, the resource mapping manner of the first feedback information is a second resource mapping manner; and
in a case that the target access manner is a first category LBT access manner, the resource selection manner of the first feedback information is a second resource selection manner.

Optionally, in a case that the target access manner is a first category LBT or second category LBT access manner, the channel access procedure includes: executing, by the first terminal, transmission according to configured or indicated CPE information.

Optionally, indication information of the CPE information is carried in target indication signaling, and the target indication signaling is downlink control information DCI signaling or sidelink control information SCI signaling.

Optionally, the CPE information indicates that a CPE transmission location is before or after a start moment of the first feedback information.

Optionally, a parameter of the channel access procedure includes a first channel access priority class CAPC, and the first CAPC meets at least one of the following:
there is a mapping relationship between the first CAPC and sidelink information quality of service;
the first CAPC is determined according to a fourth object of a PSSCH corresponding to the first feedback information;
the first CAPC is determined according to a priority indicated by a PSCCH corresponding to the first feedback information;
the first CAPC is the same as a second CAPC of the PSSCH corresponding to the first feedback information;
the first CAPC is determined according to a lowest CAPC value of to-be-transmitted data;
in a case that the first feedback information corresponds to L CAPCs, and the first feedback information is carried only in a PSFCH, the first CAPC is determined according to a preset regulation, where L is an integer greater than 1;
the first CAPC is associated with a quantity of candidate resources or a quantity of remaining candidate resources; and
the first CAPC is a CAPC that is of a PSFCH and that is stipulated in a protocol, preconfigured, or configured, where
the fourth object includes a priority and a logical channel priority.

Optionally, the preset regulation includes any one of the following:
the first CAPC is a lowest CAPC in the L CAPCs;
the first CAPC is determined according to a priority or a CAPC corresponding to a first PSSCH associated with a second terminal; and
the first CAPC is determined according to a priority or a CAPC corresponding to a second PSSCH associated with the second terminal, where
the first PSSCH is associated with the PSFCH, the second PSSCH is a PSSCH within a first COT of the second terminal, and a time domain location of the PSFCH is within the first COT.

Optionally, in a case that the first CAPC is associated with the quantity of candidate resources or the quantity of remaining candidate resources, the first CAPC meets any one of the following:
in a case that the quantity of candidate resources is greater than or equal to a third preset value, a CAPC value of the first CAPC is a first threshold; and in a case that the quantity of candidate resources is less than the third preset value, the CAPC value of the first CAPC is a second threshold; and
in a case that the quantity of remaining candidate resources is greater than or equal to a fourth preset value, the CAPC value of the first CAPC is the first threshold; and in a case that the quantity of remaining candidate resources is less than the fourth preset value, the CAPC value of the first CAPC is the second threshold.

The channel access apparatus for sidelink feedback information provided in this embodiment of this application can implement the processes of the method embodiment in FIG. 2. To avoid repetition, details are not described herein again.

It should be noted that, the channel access processing method for sidelink feedback information provided in the embodiments of this application may be performed by a channel access processing apparatus for sidelink feedback information, or a control module that is in the channel access processing apparatus for sidelink feedback information and that is configured to perform the channel access processing method for sidelink feedback information. In the embodiments of this application, an example in which the channel access processing apparatus for sidelink feedback information performs the channel access processing method for sidelink feedback information is used to describe the channel access processing apparatus for sidelink feedback information provided in the embodiments of this application.

Referring to FIG. 5, FIG. 5 is a structural diagram of a channel access processing apparatus for sidelink feedback information according to an embodiment of this application. As shown in FIG. 5, a channel access processing apparatus for sidelink feedback information 500 includes:
a sending module 501, configured to send target indication information to a first terminal, where the target indication information is used by the first terminal to determine a target access manner for executing a channel access procedure of first feedback information.

Optionally, the target indication information is used to indicate at least one of the following:
N access manners;
a first association relationship between an access manner and a first object, where the first object includes at least one of a resource, a format, and a sequence of a physical sidelink feedback channel PSFCH;
a second association relationship between an access manner and a second object, where the second object includes at least one of feedback information, content carried in a multiplexed physical sidelink shared channel PSSCH, and a subcarrier spacing SCS;
a third association relationship between an access manner and a third object, where the third object includes at least one of quality of service of feedback information, a priority of feedback information, quality of service of a PSSCH corresponding to feedback information, a priority of a PSSCH corresponding to feedback information, a quantity of candidate resources of feedback information, a quantity of remaining candidate resources of feedback information, and a resource number of a candidate resource of feedback information; and
a channel access manner of second feedback information.

Optionally, in a case that the target access manner is determined based on the first association relationship, the target access manner meets at least one of the following:
in a case that the first feedback information is a first format, a first sequence, or a first symbol quantity, the target access manner is a first category LBT access manner; and
in a case that the first feedback information is a second format, a second sequence, or a second symbol quantity, the target access manner is a second category LBT access manner.

In a case that the target access manner is determined based on the second association relationship, the target access manner is associated with the data transmission type or the target identifier in the PSSCH.

Optionally, in a case that the target access manner is determined based on the second association relationship, the target access manner is associated with the data transmission type or the target identifier in the PSSCH.

Optionally, the target access manner meets at least one of the following:
in a case that the data transmission type is a broadcast data type or the target identifier is a broadcast identifier, the target access manner is a first category LBT or second category LBT access manner;
in a case that the data transmission type is a multicast data type or the target identifier is a multicast identifier, the target access manner is a first category LBT or second category LBT access manner; and
in a case that the data transmission type is a unicast data type or the target identifier is a unicast identifier, the target access manner is a second category or third category LBT access manner.

Optionally, the target access manner is associated with a first object of feedback information, and the target access manner meets at least one of the following:
in a case that the first feedback information is carried only in a PSFCH, the target access manner is a first category LBT or second category LBT access manner;
the target access manner is associated with a data transmission type or a data transmission target identifier in a PSSCH;
in a case that the first feedback information carries a sidelink scheduling request, the target access manner is a first category LBT or second category LBT access manner; and
in a case that the first feedback information carries a sidelink reference signal, the target access manner is a first category LBT or second category LBT access manner.

Optionally, in a case that the target access manner is determined based on the channel access manner of the second feedback information, the target access manner is at least one of the following:
a fastest or slowest channel access manner in M access manners;
a fastest or slowest channel access manner in M1 access manners associated with the second feedback information;
a channel access manner of an m^{th} piece of second feedback information, where m is a preset value; and
a channel access manner of second feedback information whose frequency domain resource is adjacent to or closest to that of the first feedback information, where
the M access manners include the M1 access manners and M2 access manners associated with the first feedback information, M1 is a positive integer less than or equal to M, and a sum of M1 and M2 is M.

Optionally, the second feedback information meets at least one of the following:
a start moment of the second feedback information is the same as a start moment of the first feedback information; and
the second feedback information is feedback information other than the first feedback information in to-be-sent feedback information.

Optionally, the second feedback information meets at least one of the following:
a start moment of the second feedback information is the same as a start moment of the first feedback information; and
the second feedback information is feedback information other than the first feedback information in to-be-sent feedback information.

Optionally, a parameter of the channel access procedure includes a first channel access priority class CAPC, and the first CAPC meets at least one of the following:
there is a mapping relationship between the first CAPC and sidelink information quality of service;
the first CAPC is determined according to a fourth object of a PSSCH corresponding to the first feedback information;
the first CAPC is determined according to a priority indicated by a PSCCH corresponding to the first feedback information;
the first CAPC is the same as a second CAPC of the PSSCH corresponding to the first feedback information;
the first CAPC is determined according to a lowest CAPC value of to-be-transmitted data;
in a case that the first feedback information corresponds to L CAPCs, and the first feedback information is carried only in a PSFCH, the first CAPC is determined according to a preset regulation, where L is an integer greater than 1;
the first CAPC is associated with a quantity of candidate resources or a quantity of remaining candidate resources; and
the first CAPC is a CAPC that is of a PSFCH and that is stipulated in a protocol, preconfigured, or configured, where
the fourth object includes a priority and a logical channel priority.

Optionally, the preset regulation includes any one of the following:
the first CAPC is a lowest CAPC in the L CAPCs;
the first CAPC is determined according to a priority or a CAPC corresponding to a first PSSCH associated with a second terminal; and
the first CAPC is determined according to a priority or a CAPC corresponding to a second PSSCH associated with the second terminal, where
the first PSSCH is associated with the PSFCH, the second PSSCH is a PSSCH within a first COT of the second terminal, and a time domain location of the PSFCH is within the first COT.

Optionally, in a case that the first CAPC is associated with the quantity of candidate resources or the quantity of remaining candidate resources, the first CAPC meets any one of the following:
in a case that the quantity of candidate resources is greater than or equal to a third preset value, a CAPC value of the first CAPC is a first threshold; and in a case that the quantity of candidate resources is less than the third preset value, the CAPC value of the first CAPC is a second threshold; and
in a case that the quantity of remaining candidate resources is greater than or equal to a fourth preset value, the CAPC value of the first CAPC is the first threshold; and in a case that the quantity of remaining candidate resources is less than the fourth preset value, the CAPC value of the first CAPC is the second threshold.

The channel access processing apparatus for sidelink feedback information provided in this embodiment of this application can implement the processes of the method embodiment in FIG. 3. To avoid repetition, details are not described herein again.

The channel access apparatus for sidelink feedback information or the channel access processing apparatus for sidelink feedback information in the embodiments of this application may be an apparatus, an apparatus or an electronic device with an operating system, or may be a component, an integrated circuit, or a chip in a terminal. The apparatus may be a mobile terminal, or a non-mobile terminal. For example, the mobile terminal may include but is not limited to the foregoing listed types of the terminal 11. The non-mobile terminal may be a server, a network attached storage (Network Attached Storage, NAS), a personal computer (Personal Computer, PC), a television (television, TV), a teller machine, or a self-service machine. This is not specifically limited in this embodiment of this application.

The channel access apparatus for sidelink feedback information or the channel access processing apparatus for sidelink feedback information provided in the embodiments of this application can implement the processes implemented in the method embodiments shown in FIG. 2 to FIG. 3, and achieve a same technical effect. To avoid repetition, details are not described herein again.

Optionally, as shown in FIG. 6, an embodiment of this application further provides a communication device 600, including a processor 601, a memory 602, and a program or an instruction that is stored in the memory 602 and can be run on the processor 601. The program or the instruction is executed by the processor 601 to implement the processes of the foregoing embodiment of the channel access method for sidelink feedback information or the channel access processing method for sidelink feedback information, and a same technical effect can be achieved. To avoid repetition, details are not described herein again.

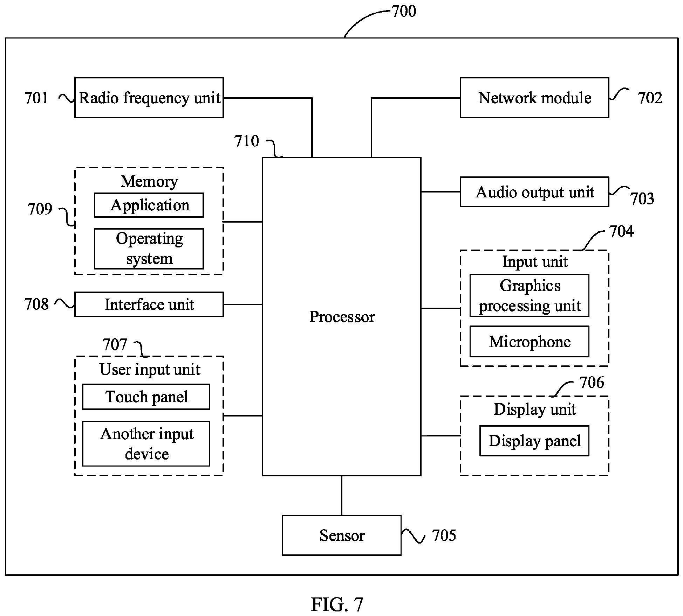

An embodiment of this application further provides a terminal, including a processor and a communication interface. The processor is configured to: determine a target access manner; and execute a channel access procedure of first feedback information according to the target access manner. Alternatively, the communication interface is configured to send target indication information to a first terminal, where the target indication information is used by the first terminal to determine a target access manner for executing a channel access procedure of first feedback information. This terminal embodiment corresponds to the foregoing method embodiment on the terminal side. Each implementation process and implementation of the foregoing method embodiment may be applicable to this terminal embodiment, and a same technical effect can be achieved. Specifically, FIG. 7 is a schematic diagram of a hardware structure of a terminal according to an embodiment of this application.

A terminal 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

A person skilled in the art can understand that the terminal 700 may further include the power supply (for example, a battery) that supplies power to each component. The power supply may be logically connected to the processor 710 by using a power supply management system, so as to manage functions such as charging, discharging, and power consumption by using the power supply management system. The terminal structure shown in FIG. 7 constitutes no limitation on the terminal, and the terminal may include more or fewer components than those shown in the figure, or combine some components, or have different component arrangements. Details are not described herein.

It should be understood that, in this embodiment of this application, the input unit 704 may include a graphics processing unit (Graphics Processing Unit, GPU) and a microphone, and the graphics processing unit processes image data of a still image or a video that is obtained by an image capturing apparatus (for example, a camera) in a video capturing mode or an image capturing mode. The display unit 706 may include a display panel. The display panel may be configured in a form such as a liquid crystal display or an organic light-emitting diode. The user input unit 707 may include a touch panel and another input device. The touch panel is also referred to as a touchscreen. The touch panel may include two parts: a touch detection apparatus and a touch controller. The another input device may include but is not limited to a physical keyboard, a functional button (such as a volume control button or a power on/off button), a trackball, a mouse, and a joystick. Details are not described herein.

In this embodiment of this application, the radio frequency unit 701 receives downlink data from a network side device and then sends the downlink data to the processor 710 for processing; and sends uplink data to the network side device. Usually, the radio frequency unit 701 includes but is not limited to an antenna, at least one amplifier, a transceiver, a coupler, a low noise amplifier, a duplexer, and the like.

The memory 709 may be configured to store a software program or an instruction and various data. The memory 709 may mainly include a program or instruction storage area and a data storage area. The program or instruction storage area may store an operating system, and an application or an instruction required by at least one function (for example, a sound playing function or an image playing function). In addition, the memory 709 may include a high-speed random access memory, and may further include a non-transient memory. The non-transient memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-transient solid-state storage device.

The processor 710 may include one or more processing units. Optionally, an application processor and a modem processor may be integrated into the processor 710. The application processor mainly processes an operating system, a user interface, an application, an instruction, or the like. The modem processor mainly processes wireless communication, for example, a baseband processor. It can be understood that, alternatively, the modem processor may not be integrated into the processor 710.

The processor 710 is configured to: determine a target access manner; and execute a channel access procedure of first feedback information according to the target access manner.

Alternatively, the radio frequency unit 701 is configured to send target indication information to a first terminal, where the target indication information is used by the first terminal to determine a target access manner for executing a channel access procedure of first feedback information.

In this embodiment of this application, the processor 710 and the radio frequency unit 701 can implement the steps of the foregoing channel access method for sidelink feedback information or the foregoing channel access processing method for sidelink feedback information. For details, refer to the descriptions in the foregoing embodiment. Details are not described herein again.

An embodiment of this application further provides a network side device, including a processor and a communication interface. The communication interface is configured to send target indication information to a first terminal, where the target indication information is used by the first terminal to determine a target access manner for executing a channel access procedure of first feedback information. This network side device embodiment corresponds to the foregoing method embodiment on the network side device. Each implementation process and implementation of the foregoing method embodiment may be applicable to this network side device embodiment, and a same technical effect can be achieved.

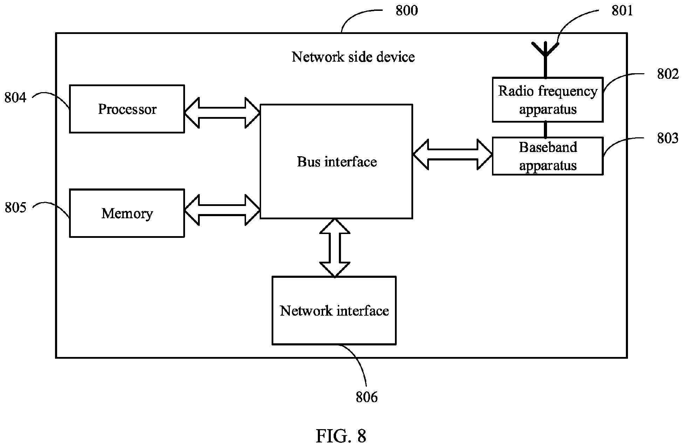

Specifically, an embodiment of this application further provides a network side device. As shown in FIG. 8, a network side device 800 includes an antenna 801, a radio frequency apparatus 802, and a baseband apparatus 803. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes to-be-sent information, and sends the information to the radio frequency apparatus 802. The radio frequency apparatus 802 processes the received information and then sends the information by using the antenna 801.

The band processing apparatus may be located in the baseband apparatus 803. The method performed by the network side device in the foregoing embodiment may be implemented in the baseband apparatus 803. The baseband apparatus 803 includes a processor 804 and a memory 805.

The baseband apparatus 803 may include, for example, at least one baseband board, where a plurality of chips is disposed on the baseband board. As shown in FIG. 8, one chip, for example, the processor 804, is connected to the memory 805, to invoke a program in the memory 805 to perform the operations of the network side device shown in the foregoing method embodiment.

The baseband apparatus 803 may further include a network interface 806, configured to exchange information with the radio frequency apparatus 802. For example, the interface is a common public radio interface (Common Public Radio Interface, CPRI).

Specifically, the network side device in this embodiment of this application further includes an instruction or a program that is stored in the memory 805 and that can be run on the processor 804. The processor 804 invokes the instruction or the program in the memory 805 to perform the method performed by the modules shown in FIG. 3, and a same technical effect is achieved. To avoid repetition, details are not described herein again.

An embodiment of this application further provides a readable storage medium. A program or an instruction is stored on the readable storage medium, and the program or the instruction is executed by a processor to implement the processes of the foregoing embodiment of the channel access method for sidelink feedback information or the channel access processing method for sidelink feedback information, and a same technical effect can be achieved. To avoid repetition, details are not described herein again.

The processor is a processor in the electronic device in the foregoing embodiment. The readable storage medium includes a computer readable storage medium, for example, a read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement the processes in the foregoing embodiments of the channel access method for sidelink feedback information or the channel access processing method for sidelink feedback information, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a program product. The program product is stored in a non-transient storage medium, and the program product is executed by at least one processor to implement the processes of the foregoing embodiment of the channel access method for sidelink feedback information or the channel access processing method for sidelink feedback information, and a same technical effect can be achieved. To avoid repetition, details are not described herein again.

An embodiment of this application further provides a communication device, configured to perform the processes of the foregoing embodiment of the channel access method for sidelink feedback information or the channel access processing method for sidelink feedback information, and a same technical effect can be achieved. To avoid repetition, details are not described herein again.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the foregoing descriptions of the embodiments, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, an air conditioner, a base station, or the like) to perform the methods described in the embodiments of this application.

The embodiments of this application are described above with reference to the accompanying drawings, but this application is not limited to the above specific implementations, and the above specific implementations are merely illustrative but not restrictive. Under the enlightenment of this application, a person of ordinary skill in the art can make many forms without departing from the purpose of this application and the protection scope of the claims, all of which fall within the protection of this application.

## Claims

1. A channel access method for sidelink feedback information, comprising:
determining, by a first terminal, a target access manner; and
executing, by the first terminal, a channel access procedure of first feedback information according to the target access manner.

2. The method according to claim 1, wherein the target access manner is determined based on at least one of the following:
N access manners, wherein N is a positive integer, and the N access manners are determined through at least one of the following: being stipulated in a protocol, being configured by a network side device, being preconfigured by a network side device, being indicated by a network side device, being configured by a terminal, and being indicated by a terminal;
a first association relationship between an access manner and a first object, wherein the first object comprises at least one of a resource, a format, and a sequence of a physical sidelink feedback channel PSFCH;
a second association relationship between an access manner and a second object, wherein the second object comprises at least one of feedback information, content carried in a multiplexed physical sidelink shared channel PSSCH, and a subcarrier spacing SCS;
a third association relationship between an access manner and a third object, wherein the third object comprises at least one of quality of service of feedback information, a priority of feedback information, quality of service of a PSSCH corresponding to feedback information, a priority of a PSSCH corresponding to feedback information, a quantity of candidate resources of feedback information, a quantity of remaining candidate resources of feedback information, and a resource number of a candidate resource of feedback information; and
a channel access manner of second feedback information.

3. The method according to claim 2, wherein the N access manners meet at least one of the following:
in a case that the first feedback information is within a channel occupancy time COT of a second terminal, the N access manners comprise a default first access manner;
the N access manners comprise a second access manner indicated by a network side device by using downlink control information; and
the N access manners comprise a third access manner indicated by the second terminal.

4. The method according to claim 3, wherein in a case that N is greater than 1, and the N access manners comprise N1 second access manners and N2 third access manners, the target access manner is any one of the following access manners:
a most recently indicated access manner in the N access manners, the N1 second access manners, or the N2 third access manners;
a preset access manner in the N access manners, the N1 second access manners, or the N2 third access manners, wherein the preset access manner is indicated by the network side device or the second terminal; and
an access manner corresponding to a longest or shortest listen before talk LBT time in the N access manners, wherein
both N1 and N2 are natural numbers, and a sum of N1 and N2 is N.

5. The method according to claim 3, wherein the COT of the second terminal is indicated by the second terminal or the network side device.

6. The method according to claim 2, wherein in a case that the target access manner is determined based on the first association relationship, the target access manner meets at least one of the following:
in a case that the first feedback information is a first format, a first sequence, or a first symbol quantity, the target access manner is a first category LBT access manner; and
in a case that the first feedback information is a second format, a second sequence, or a second symbol quantity, the target access manner is a second category LBT access manner.

7. The method according to claim 2, wherein the target access manner is associated with a first object of feedback information, and the target access manner meets at least one of the following:
in a case that the first feedback information is carried only in a PSFCH, the target access manner is a first category LBT or second category LBT access manner;
in a case that the first feedback information comprises only HARQ information, the target access manner is a first category LBT or second category LBT access manner;
the target access manner is associated with a data transmission type or a data transmission target identifier in a PSSCH;
in a case that the first feedback information carries a sidelink scheduling request, the target access manner is a first category LBT or second category LBT access manner; and
in a case that the first feedback information carries a sidelink reference signal, the target access manner is a first category LBT or second category LBT access manner.

8. The method according to claim 7, wherein in a case that the target access manner is determined based on the second association relationship, the target access manner is associated with the data transmission type or the target identifier in the PSSCH.

9. The method according to claim 8, wherein the target access manner meets at least one of the following:
in a case that the data transmission type is a broadcast data type or the target identifier is a broadcast identifier, the target access manner is a first category LBT or second category LBT access manner;
in a case that the data transmission type is a multicast data type or the target identifier is a multicast identifier, the target access manner is a first category LBT or second category LBT access manner; and
in a case that the data transmission type is a unicast data type or the target identifier is a unicast identifier, the target access manner is a second category or third category LBT access manner.

10. The method according to claim 2, wherein in a case that the target access manner is determined based on the second association relationship, and the target access manner is associated with at least one of the quantity of candidate resources of the feedback information, the quantity of remaining resources of the feedback information, and the resource number of the candidate resource of the feedback information, the target access manner meets at least one of the following:
an A^{th} candidate resource is detected in a second category LBT access manner with first detection duration, wherein A is a first preset value;
in a case that the quantity of remaining candidate resources is less than or equal to a second preset value, a second category LBT or first category LBT access manner is used;
when the second category LBT access manner with the first detection duration fails to detect the A^{th} candidate resource, an (A+n)^{th} candidate resource is detected in a second category or third category LBT access manner with second detection duration, wherein n is a positive integer; and
when the second category LBT access manner with the first detection duration fails to detect the first A candidate resources, an (A+n)^{th} candidate resource is detected in a second category or third category LBT access manner with second detection duration, wherein n is a positive integer.

11. The method according to claim 2, wherein in a case that the target access manner is determined based on the channel access manner of the second feedback information, the target access manner is at least one of the following:
a fastest or slowest channel access manner in M access manners;
a fastest or slowest channel access manner in M1 access manners associated with the second feedback information;
a channel access manner of an m^{th} piece of second feedback information, wherein m is a preset value; and
a channel access manner of second feedback information whose frequency domain resource is adjacent to or closest to that of the first feedback information, wherein
the M access manners comprise the M1 access manners and M2 access manners associated with the first feedback information, M1 is a positive integer less than or equal to M, and a sum of M1 and M2 is M.

12. The method according to claim 2 or 11, wherein the second feedback information meets at least one of the following:
a start moment of the second feedback information is the same as a start moment of the first feedback information; and
the second feedback information is feedback information other than the first feedback information in to-be-sent feedback information.

13. The method according to claim 1, wherein the method further comprises:
determining, by the first terminal, at least one of a format, a resource mapping manner, and a resource selection manner of the first feedback information according to a first mapping relationship between an access manner and feedback information.

14. The method according to claim 13, wherein the first mapping relationship meets at least one of the following:
in a case that the target access manner is a second category or third category LBT access manner, the format of the first feedback information is a first format;
in a case that the target access manner is a second category or third category LBT access manner, the resource mapping manner of the first feedback information is a first resource mapping manner;
in a case that the target access manner is a second category or third category LBT access manner, the resource selection manner of the first feedback information is a first resource selection manner;
in a case that the target access manner is a first category LBT access manner, the format of the first feedback information is a second format;
in a case that the target access manner is a first category LBT access manner, the resource mapping manner of the first feedback information is a second resource mapping manner; and
in a case that the target access manner is a first category LBT access manner, the resource selection manner of the first feedback information is a second resource selection manner.

15. The method according to claim 1, wherein in a case that the target access manner is a first category LBT or second category LBT access manner, the channel access procedure comprises: executing, by the first terminal, transmission according to configured or indicated cyclic prefix extension CPE information.

16. The method according to claim 15, wherein indication information of the CPE information is carried in target indication signaling, and the target indication signaling is downlink control information DCI signaling or sidelink control information SCI signaling.

17. The method according to claim 15, wherein the CPE information indicates that a CPE transmission location is before or after a start moment of the first feedback information.

18. The method according to claim 1, wherein a parameter of the channel access procedure comprises a first channel access priority class CAPC, and the first CAPC meets at least one of the following:
there is a mapping relationship between the first CAPC and sidelink information quality of service;
the first CAPC is determined according to a fourth object of a PSSCH corresponding to the first feedback information;
the first CAPC is determined according to a priority indicated by a PSCCH corresponding to the first feedback information;
the first CAPC is the same as a second CAPC of the PSSCH corresponding to the first feedback information;
the first CAPC is determined according to a lowest CAPC value of to-be-transmitted data;
in a case that the first feedback information corresponds to L CAPCs, and the first feedback information is carried only in a PSFCH, the first CAPC is determined according to a preset regulation, wherein L is an integer greater than 1;
the first CAPC is associated with a quantity of candidate resources or a quantity of remaining candidate resources; and
the first CAPC is a CAPC that is of a PSFCH and that is stipulated in a protocol, preconfigured, or configured, wherein
the fourth object comprises a priority and a logical channel priority.

19. The method according to claim 18, wherein the preset regulation comprises any one of the following:
the first CAPC is a lowest CAPC in the L CAPCs;
the first CAPC is determined according to a priority or a CAPC corresponding to a first PSSCH associated with a second terminal; and
the first CAPC is determined according to a priority or a CAPC corresponding to a second PSSCH associated with the second terminal, wherein
the first PSSCH is associated with the PSFCH, the second PSSCH is a PSSCH within a first COT of the second terminal, and a time domain location of the PSFCH is within the first COT.

20. The method according to claim 18, wherein in a case that the first CAPC is associated with the quantity of candidate resources or the quantity of remaining candidate resources, the first CAPC meets any one of the following:
in a case that the quantity of candidate resources is greater than or equal to a third preset value, a CAPC value of the first CAPC is a first threshold; and in a case that the quantity of candidate resources is less than the third preset value, the CAPC value of the first CAPC is a second threshold; and
in a case that the quantity of remaining candidate resources is greater than or equal to a fourth preset value, the CAPC value of the first CAPC is the first threshold; and in a case that the quantity of remaining candidate resources is less than the fourth preset value, the CAPC value of the first CAPC is the second threshold.

21. A channel access processing method for sidelink feedback information, comprising:
sending, by a communication device, target indication information to a first terminal, wherein the target indication information is used by the first terminal to determine a target access manner for executing a channel access procedure of first feedback information, wherein
the communication device is a scheduling terminal, a receive end of the first feedback information, or a network side device.

22. The method according to claim 21, wherein the target indication information is used to indicate at least one of the following:
N access manners;
a first association relationship between an access manner and a first object, wherein the first object comprises at least one of a resource, a format, and a sequence of a physical sidelink feedback channel PSFCH;
a second association relationship between an access manner and a second object, wherein the second object comprises at least one of feedback information, content carried in a multiplexed physical sidelink shared channel PSSCH, and a subcarrier spacing SCS;
a third association relationship between an access manner and a third object, wherein the third object comprises at least one of quality of service of feedback information, a priority of feedback information, quality of service of a PSSCH corresponding to feedback information, a priority of a PSSCH corresponding to feedback information, a quantity of candidate resources of feedback information, a quantity of remaining candidate resources of feedback information, and a resource number of a candidate resource of feedback information; and
a channel access manner of second feedback information.

23. The method according to claim 22, wherein in a case that the target access manner is determined based on the first association relationship, the target access manner meets at least one of the following:
in a case that the first feedback information is a first format, a first sequence, or a first symbol quantity, the target access manner is a first category LBT access manner; and
in a case that the first feedback information is a second format, a second sequence, or a second symbol quantity, the target access manner is a second category LBT access manner.

24. The method according to claim 22, wherein the target access manner is associated with a first object of feedback information, and the target access manner meets at least one of the following:
in a case that the first feedback information is carried only in a PSFCH, the target access manner is a first category LBT or second category LBT access manner;
the target access manner is associated with a data transmission type or a data transmission target identifier in a PSSCH;
in a case that the first feedback information carries a sidelink scheduling request, the target access manner is a first category LBT or second category LBT access manner; and
in a case that the first feedback information carries a sidelink reference signal, the target access manner is a first category LBT or second category LBT access manner.

25. The method according to claim 22, wherein in a case that the target access manner is determined based on the channel access manner of the second feedback information, the target access manner is at least one of the following:
a fastest or slowest channel access manner in M access manners;
a fastest or slowest channel access manner in M1 access manners associated with the second feedback information;
a channel access manner of an m^{th} piece of second feedback information, wherein m is a preset value; and
a channel access manner of second feedback information whose frequency domain resource is adjacent to or closest to that of the first feedback information, wherein
the M access manners comprise the M1 access manners and M2 access manners associated with the first feedback information, M1 is a positive integer less than or equal to M, and a sum of M1 and M2 is M.

26. The method according to claim 22 or 25, wherein the second feedback information meets at least one of the following:
a start moment of the second feedback information is the same as a start moment of the first feedback information; and
the second feedback information is feedback information other than the first feedback information in to-be-sent feedback information.

27. A channel access apparatus for sidelink feedback information, comprising:
a determining module, configured to determine a target access manner; and
an execution module, configured to execute a channel access procedure of first feedback information according to the target access manner.

28. The apparatus according to claim 27, wherein the target access manner is determined based on at least one of the following:
N access manners, wherein N is a positive integer, and the N access manners are determined through at least one of the following: being stipulated in a protocol, being configured by a network side device, being preconfigured by a network side device, being indicated by a network side device, being configured by a terminal, and being indicated by a terminal;
a first association relationship between an access manner and a first object, wherein the first object comprises at least one of a resource, a format, and a sequence of a physical sidelink feedback channel PSFCH;
a second association relationship between an access manner and a second object, wherein the second object comprises at least one of feedback information, content carried in a multiplexed physical sidelink shared channel PSSCH, and a subcarrier spacing SCS;
a third association relationship between an access manner and a third object, wherein the third object comprises at least one of quality of service of feedback information, a priority of feedback information, quality of service of a PSSCH corresponding to feedback information, a priority of a PSSCH corresponding to feedback information, a quantity of candidate resources of feedback information, a quantity of remaining candidate resources of feedback information, and a resource number of a candidate resource of feedback information; and
a channel access manner of second feedback information.

29. The apparatus according to claim 28, wherein the N access manners meet at least one of the following:
in a case that the first feedback information is within a channel occupancy time COT range of a second terminal, the N access manners comprise a default first access manner;
the N access manners comprise a second access manner indicated by a network side device by using downlink control information; and
the N access manners comprise a third access manner indicated by the second terminal.

30. The apparatus according to claim 29, wherein in a case that N is greater than 1, and the N access manners comprise N1 second access manners and N2 third access manners, the target access manner is any one of the following access manners:
a most recently indicated access manner in the N access manners, the N1 second access manners, or the N2 third access manners;
a preset access manner in the N access manners, the N1 second access manners, or the N2 third access manners, wherein the preset access manner is indicated by the network side device or the second terminal; and
an access manner corresponding to a longest or shortest listen before talk LBT time in the N access manners, wherein
both N1 and N2 are natural numbers, and a sum of N1 and N2 is N.

31. The apparatus according to claim 28, wherein in a case that the target access manner is determined based on the first association relationship, the target access manner meets at least one of the following:
in a case that the first feedback information is a first format, a first sequence, or a first symbol quantity, the target access manner is a first category LBT access manner; and
in a case that the first feedback information is a second format, a second sequence, or a second symbol quantity, the target access manner is a second category LBT access manner.

32. The apparatus according to claim 28, wherein the target access manner is associated with a first object of feedback information, and the target access manner meets at least one of the following:
in a case that the first feedback information is carried only in a PSFCH, the target access manner is a first category LBT or second category LBT access manner;
the target access manner is associated with a data transmission type or a data transmission target identifier in a PSSCH;
in a case that the first feedback information carries a sidelink scheduling request, the target access manner is a first category LBT or second category LBT access manner; and
in a case that the first feedback information carries a sidelink reference signal, the target access manner is a first category LBT or second category LBT access manner.

33. A channel access processing apparatus for sidelink feedback information, comprising:
a sending module, configured to send target indication information to a first terminal, wherein the target indication information is used by the first terminal to determine a target access manner for executing a channel access procedure of first feedback information.

34. The apparatus according to claim 33, wherein the target indication information is used to indicate at least one of the following:
N access manners;
a first association relationship between an access manner and a first object, wherein the first object comprises at least one of a resource, a format, and a sequence of a physical sidelink feedback channel PSFCH;
a second association relationship between an access manner and a second object, wherein the second object comprises at least one of feedback information, content carried in a multiplexed physical sidelink shared channel PSSCH, and a subcarrier spacing SCS;
a third association relationship between an access manner and a third object, wherein the third object comprises at least one of quality of service of feedback information, a priority of feedback information, quality of service of a PSSCH corresponding to feedback information, a priority of a PSSCH corresponding to feedback information, a quantity of candidate resources of feedback information, a quantity of remaining candidate resources of feedback information, and a resource number of a candidate resource of feedback information; and
a channel access manner of second feedback information.

35. A terminal, comprising a memory, a processor, and a program that is stored in the memory and that can be run on the processor, wherein the program is executed by the processor to implement the steps of the channel access method for sidelink feedback information according to any one of claims 1 to 20.

36. A communication device, comprising a memory, a processor, and a program or an instruction that is stored in the memory and that can be run on the processor, wherein the program or the instruction is executed by the processor to implement the steps of the channel access processing method for sidelink feedback information according to any one of claims 21 to 26.

37. A readable storage medium, wherein a program or an instruction is stored on the readable storage medium, and the program or the instruction is executed by a processor to implement the steps of the channel access method for sidelink feedback information according to any one of claims 1 to 20, or the program or the instruction is executed by a processor to implement the steps of the channel access processing method for sidelink feedback information according to any one of claims 21 to 26.

38. A chip, comprising a processor and a communication interface, wherein the communication interface is coupled to the processor, and the processor is configured to run a program or an instruction to implement the channel access method for sidelink feedback information according to any one of claims 1 to 20, or the channel access processing method for sidelink feedback information according to any one of claims 21 to 26.

39. A computer program product, wherein the computer program product is stored in a non-volatile storage medium, and the computer program product is executed by at least one processor to implement the channel access method for sidelink feedback information according to any one of claims 1 to 20, or the channel access processing method for sidelink feedback information according to any one of claims 21 to 26.

40. A communication device, configured to perform the channel access method for sidelink feedback information according to any one of claims 1 to 20, or the channel access processing method for sidelink feedback information according to any one of claims 21 to 26.
